(19) **Europäisches Patentamt**

**European Patent Office**

**Office européen des brevets**

(11) Veröffentlichungsnummer: **0 459 430 A1**

(12) **EUROPÄISCHE PATENTANMELDUNG**

(21) Anmeldenummer: **91108752.6**

(22) Anmeldetag: **29.05.91**

(51) Int. Cl.⁵: **A47B 13/02, F16B 12/52, F16B 12/44, F16B 12/30**

(30) Priorität: **01.06.90 DE 4017807**

(43) Veröffentlichungstag der Anmeldung: **04.12.91 Patentblatt 91/49**

(84) Benannte Vertragsstaaten: **BE CH ES FR GB IT LI NL**

(71) Anmelder: **FRÖSCHER ASPECT GMBH & CO. KG**
**Bahnofstrasse, 13**
**W-7141 Steinheim/Murr(DE)**

(72) Erfinder: **Fallon, Vincent Brick Cottages**

Die Erfindung geht aus von einem Möbelknoten nach der Gattung des Hauptanspruchs. Derartige Möbelknoten sind in vielfältiger Weise bekannt, wobei die Richtung der radial abzweigenden Konstruktionselemente festgelegt ist, d.h. derartige Konstruktionselemente schließen beispielsweise einen Winkel von 90° ein, weshalb für jede von einem solchen Winkel abweichende Gestaltung ein extra Möbelknoten hergestellt werden muß.

Ein bekannter gattungsgemäßer Möbelknoten (FR-PS 2.044. 122) weist eine über ein rohrförmiges Bein steckbare Buchse auf, an der jeweils rechtwinklig zwei radial abzweigende und einen rechten Winkel einschließende Kragarme angeordnet sind, an denen Möbelteile, insbesondere Profilrohre befestigbar sind. Axial ist an dieser Buchse ein Flansch befestigt, an dem wiederum eine Platte befestigbar ist.

Bei einem anderen bekannten Möbelknoten (FR-PS 1.189.024) zweigen radial zwei ebenfalls einen rechten Winkel einschließende Kragarme ab, auf die ebenfalls Profilrohre als Rahmenkonstruktion steckbar sind. Der Möbelknoten ist ebenfalls an einem Bein befestigbar, das entweder einen kreisförmigen oder einen rechteckigen Querschnitt aufweist.

Der erfindungsgemäße Möbelknoten mit den kennzeichnenden Merkmalen des Hauptanspruchs hat demgegenüber den Vorteil, daß die Winkelweite der Segmente, also deren Winkel auf der zentralen Seite der Querschnittsfläche, aus verschiedenen vorgefertigten Segmenten unterschiedlicher Winkel auswählbar ist. Maßgebend ist, daß die endgültige Bündelung der Segmente einen Verbund darstellt, um so ein Wackeln der einzelnen Segmente und dadurch der damit verbundenen Konstruktionselemente unterbunden ist. Vorzugsweise werden die Segmentwinkel so gewählt, daß diese bausteinmäßig zusammensetzbar sind, beispielsweise indem die Segmentwinkel 15° oder ein Mehrfaches davon aufweisen, um so für jegliche Kombination untereinander zur Verfügung zu stehen. Auf diese Weise können die radial abzweigenden Konstruktionselemente mit Winkeln zueinander angeordnet sein, die eine Abstufung von z.B. immer 15° aufweisen.

Ein weiterer Vorteil des erfindungsgemäßen Möbelknotens besteht darin, daß aufgrund der beiden Verbundringe eine hohe Festigkeit bei gutem ästhetischem Anblick besteht, so daß auch bei der Verwendung einer Anzahl derartiger Knoten an einem Möbelstück eine hohe Stabilität vorhanden ist. Nicht zuletzt ist die Montage eines solchen Möbelknotens sehr einfach, da nach Aufstülpen der Verbundringe diese lediglich miteinander verankert werden müssen, was natürlich in unterschiedlichster Weise erfolgen kann.

Nach einer vorteilhaften Ausgestaltung der Erfindung sind an den Enden der Segmente Zapfen vorhanden, die bei gebündelten Segmenten einen Kreisquerschnitt ergeben, so daß jeder Zapfen für sich den Flächenquerschnitt eines Kreissegments (Tortenstück) aufweist, wobei die Verbundringe je eine zentrale Ausnehmung mit einem entsprechenden kreisförmigen Querschnitt haben. Ein solcher Kreisquerschnitt ist deshalb von Vorteil, weil der Möbelbauer bei der Auswahl der einzelnen Segmente nur auf die Gesamtanzahl der einzelnen Winkel von 360° achten muß, ansonsten jedoch frei in der Zusammenstellung ist. Die Segmente selbst können im übrigen im Bereich der äußeren Mantelfläche im Querschnitt alle möglichen Formen aufweisen, ohne daß deshalb der erfindungsgemäße Aufbau des Möbelknotens behindert wäre.

Nach einer weiteren vorteilhaften Ausgestaltung der Erfindung sind die Verbundringe und die Zapfen der Segmente in Richtung der Segmente sich erweiternd konisch ausgebildet. Auf diese Weise wird erreicht, daß beim Gegeneinanderziehen der beiden Verbundringe das Bündel von Segmenten fest aneinander gepreßt wird.

Nach einer weiteren vorteilhaften Ausgestaltung der Erfindung ist mindestens einer der Verbundringe topfartig ausgebildet, so daß der Boden des Topfes einen Abschluß des Möbelknotens nach oben bildet, aber auch zur Aufnahme weiterer Funktionen, beispielsweise als Auflager einer Tischplatte oder aber auch als Angriffsteil für einen Zuganker dienen kann.

Nach einer weiteren vorteilhaften Ausgestaltung der Erfindung ist ein solcher Zuganker als Gewindebolzen ausgebildet, der zentral zwischen den Segmenten geführt ist und vorzugsweise mit seinem Kopf an einem der Verbundringböden eingehängt ist und andererseits mit seinem Gewinde in eine entsprechende Gewindebohrung des Bodens des zweiten Verbundringes greift. Natürlich kann auch eine extra Gewindemutter vorgesehen werden, beispielsweise in Form eines weiteren achsgleich angeordneten Ringes mit Gewindebohrung. Maßgebend ist, daß der Zuganker die entsprechende Spannkraft zwischen den beiden Verbundringen aufbringt.

Nach einer weiteren vorteilhaften Ausgestaltung der Erfindung ist mindestens einer der radial abzweigenden Konstruktionselemente als Möbelbein ausgebildet, welches entsprechend in Richtung Aufstellfläche (Boden) geführt ist. Hierfür ist das Möbelbein entweder gekrümmt oder abgeknickt.

Nach einer weiteren vorteilhaften Ausgestaltung der Erfindung ist mindestens einer der radial abzweigenden Konstruktionselemente als Verbindungssteg zu einem anderen Möbelknotensegment ausgebildet. Natürlich kann ein solcher Verbindungssteg auch zu einem anderen Konstruktionselement führen, beispielsweise einer Möbelseitenwand oder dergleichen. So kann dieses Konstruktionselement auch als Kragarm ausgebildet sein, auf den ein als Verbindungssteg dienendes Profilrohr steckbar ist.

Nach einer weiteren vorteilhaften Ausgestaltung der Erfindung ist am Verbundring ein radial auskragender Arm angeordnet zur Auflage und Befestigung sonstiger Möbelteile, insbesondere von Tischplatten. Durch einen solchen auskragenden Arm kann vor allem ein Abkippen der Tischplatte unterbunden werden, wenn zwei Möbelknoten relativ dicht nebeneinander angeordnet sind. Die auskragenden Arme verharren in der eingestellten Richtung, da durch das Zusammenspannen der Verbundringe auch eine Richtungsarretierung jener und damit auch der Kragarme erfolgt.

Nach einer weiteren vorteilhaften Ausgestaltung der Erfindung sind über den Zuganker in axialer Richtung weitere Möbelteile ankoppelbar. Über einen solchen Zuganker kann auf der dem Verbundring abgewandten Seite einer Tischplatte mindestens ein Tragring festgespannt werden, an dem über Tragarme weitere Elemente, wie Tabletts, Lampen, Vertikalplatten und dergleichen befestigbar sind. Auf diese Weise ist mit Hilfe der Erfindung ein vielfältiges Aufbauprogramm oberhalb der Tischplatte ermöglicht, welches fest mit dem eigentlichen Trägersystem, nämlich den Tischbeinen und den Verbindungsstegen, verbunden ist.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstandes der Erfindung ist in der Zeichnung dargestellt und auch anhand mehrerer Anwendungsbeispiele näher erläutert. Es zeigen:

Fig. 1          den erfindungsgemäßen Möbelknoten in zusammengebautem Zustand;

Fig. 2          den Möbelknoten von Fig. 1 in Explosionsdarstellung;

Fig. 3          den Möbelknoten von Fig. 1 und 2 mit gebündelten Segmenten, aber noch entfernten Verbundringen;

Fig. 4          in zusammengebautem Zustand, jedoch im Längsschnitt;

Fig. 5          vier verschiedene Beispiele a, b, c, d von Segmenten im Querschnitt mit unterschiedlichen Segmentwinkeln;

Fig. 6          ein Anwendungsbeispiel an einem Tisch mit erhöht angeordneter Ablage;

Fig. 7 u. 8          zwei Anwendungsbeispiele an einem rechteckigen und einem runden Tisch;

Fig. 9 - 12          die Ausnutzung der Erfindung zur Anbringung weiterer Büroteile.

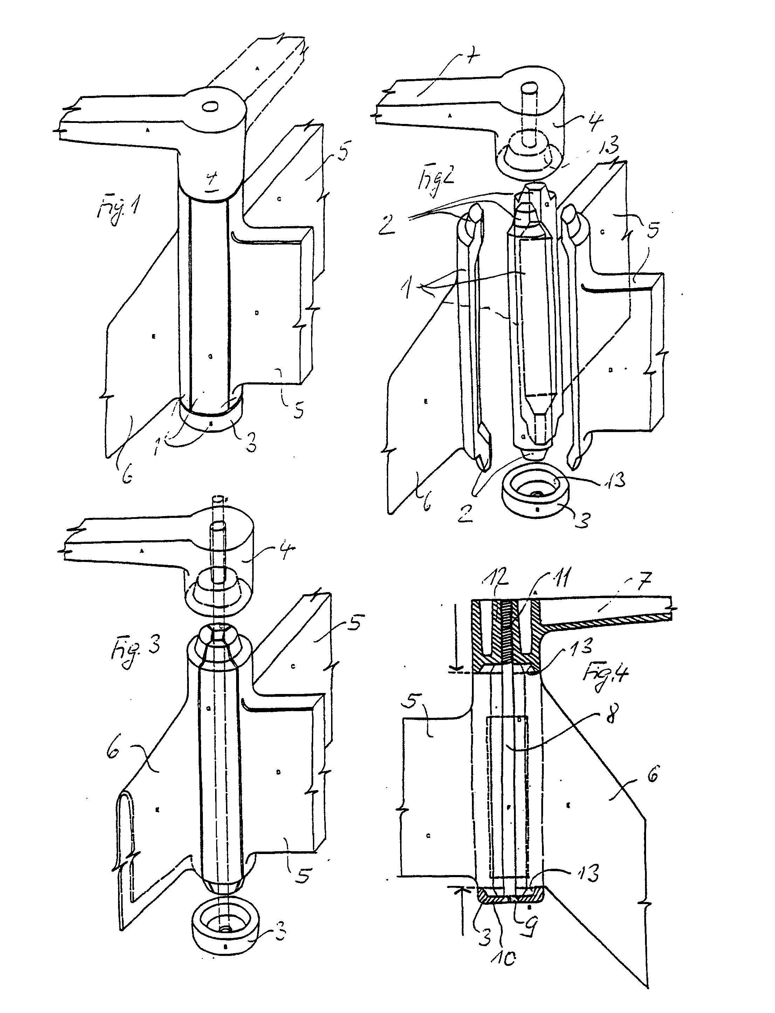

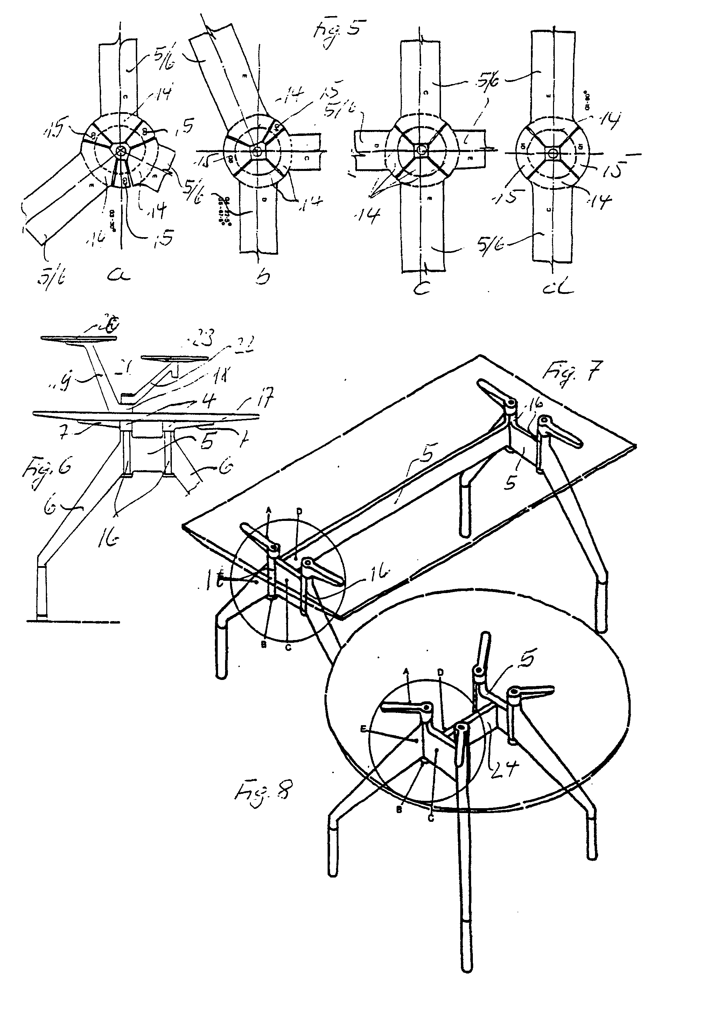

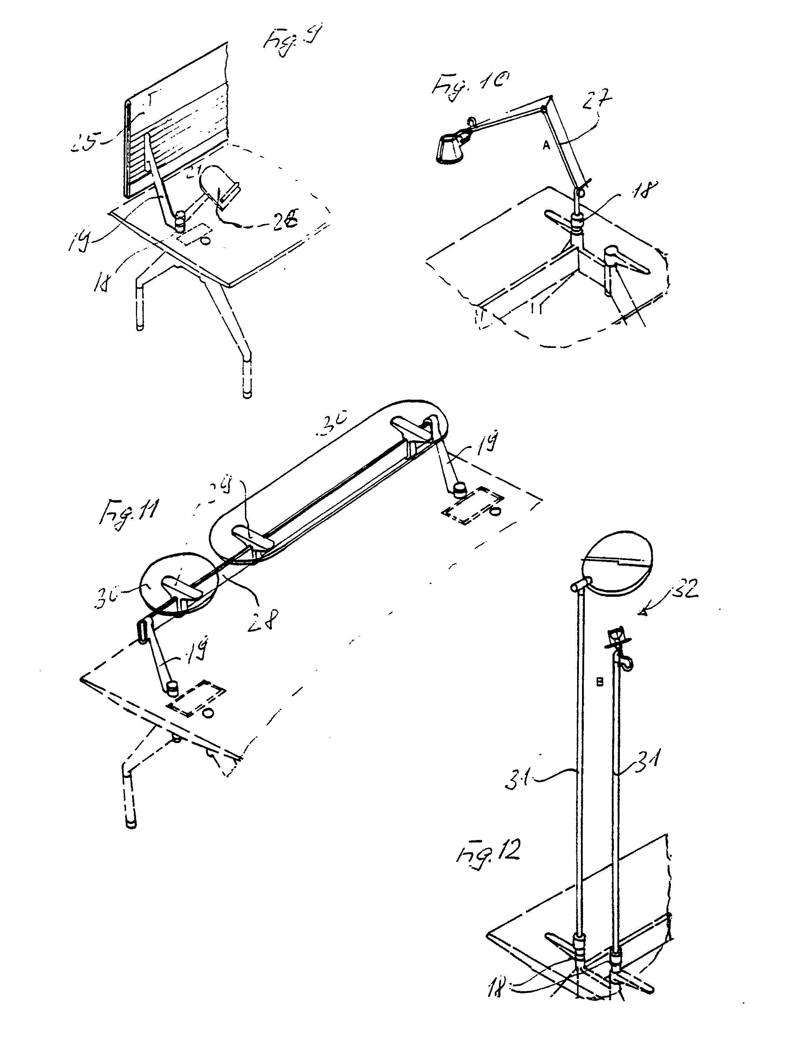

Wie in den Fig. 1-5 dargestellt, besteht der erfindungsgemäße Möbelknoten aus einzelnen Segmenten 1, die an ihren freien, sich nach außen verjüngenden, als Zapfen 2 ausgebildeten Enden über Verbundringe 3 und 4 zusammengebündelt sind. An einem Teil der Segmente 1 sind radial abzweigende Verbindungsstege 5 angeordnet, die horizontal verlaufen, während an anderen Segmenten 1 ein nach unten geführtes Möbelbein 6 angeordnet ist. Während der untere Verbundring 3 als relativ flache, die Zapfen 2 umgreifende Kappe ausgebildet ist, ist der obere Verbundring 4 verhältnismäßig lang ausgebildet und weist bündig mit seiner oberen Planfläche einen Kragarm 7 auf. Die beiden Verbundringe 3 und 4 sind durch einen als Zuganker dienenden Gewindebolzen 8 miteinander verbunden, dessen Kopf 9 sich an dem Boden 10 des topfförmig ausgebildeten Verbundringes 3 abstützt, während sein Gewinde 11 in eine entsprechende Gewindebohrung des Bodens 12 des Verbundringes 4 greift. Durch Anziehen des Gewindebolzens 8 werden die ebenfalls konisch ausgebildeten zentralen Ausnehmungen 13 der Verbundringe 3 und 4 so auf die konischen Zapfen 2 der Segmente 1 gezogen, daß zwischen den Segmenten 1 ein fester, formschlüssiger Verbund entsteht. Bei der Montage werden, ausgehend von der Darstellung in Fig. 2, zuerst die Segmente 1 zusammengeschoben, daß die in Fig. 3 dargestellte Bündelung entsteht, wonach dann von oben und unten die Verbundringe 3 und 4 drübergeschoben werden und durch den Gewindebolzen 8 zusammengezogen werden, so daß die in Fig. 1 dargestellte endgültige Form des Möbelknotens entsteht.

In Fig. 5 sind vier verschiedene Kombinationen von Segmenten mit unterschiedlichen Winkeln dargestellt. Unter a sind drei Tragsegmente 14 mit drei Füllsegmenten 15 abwechselnd angeordnet. Die Tragsegmente weisen jeweils einen Segmentwinkel von 90° auf, während die Füllsegmente hier jeweils 30° als Segmentwinkel aufweisen. Die Summe aller Winkel muß 360° betragen, hier nämlich 3 x 90° plus 3 x 30°, in der Summe also 360°. Die radial abzweigenden Konstruktionselemente 5/6 schließen zwischen sich somit jeweils einen Winkel von 120° ein.

Bei Beispiel b in Fig. 5 weisen, wie bei allen anderen Beispielen auch, die Tragsegmente 14 90°-Segmentwinkel auf, während zwischen zwei Konstruktionselementen 5/6 ein Füllsegment 15 mit 15°-Segmentwinkel, während auf der anderen Seite ein Füllsegment mit 75°-Segmentwinkel angeordnet ist. Außerdem berühren sich zwei der Tragsegmente 14 unmittelbar. Hierdurch ergibt sich erstens, daß durch diese unmittelbare Berührung dort ein Einschlußwinkel zwischen den Konstruktionselementen 5/6 von 90° entsteht. Die anderen von den Konstruktionselementen eingeschlossenen Winkel sind einerseits 105° und andererseits 165°. Die Summe der Winkel ist wiederum 360°.

Bei dem Beispiel c sind überhaupt keine Füllsegmente vorhanden, sondern nur Tragsegmente 14. Da alle Tragsegmente einen Segmentwinkel von 90° aufweisen und unmittelbar aneinander anliegen, ergibt sich, daß die Konstruktionselemente 5/6 rechte Winkel untereinander einschließen, daß sich also ihre Achsen rechtwinklig kreuzen.

Bei dem Beispiel d weisen auch die Füllsegmente 15 Segmentwinkel von 90° auf. Zudem sind nur zwei Konstruktionselemente 5/6 vorgesehen. Entsprechend dieser Anordnung fluchten somit die beiden Konstruktionselemente 5/6.

Natürlich können die Füllsegmente 15 auch andere Segmentwinkel aufweisen, nur ist es, um eine einfache Kombination zu erhalten, sinnvoll, solche Segmente 1 zu lagern, die Segmentwinkel von 15° oder ein mehrfaches davon aufweisen. Natürlich kann auch der Segmentwinkel der Tragsegmente 14 kleiner oder auch größer als 90° sein, maßgebend ist nur, daß in möglichst einfachen Kombinationen nach der Bündelung der Segmente die erforderlichen 360° erreicht werden. Bei weniger als 360° entsteht ein Spiel zwischen den Segmenten 1, die beispielsweise die Stabilität erheblich verschlechtern kann.

Bei dem in Fig. 6 dargestellten Ausführungsbeispiel ist ein Tisch von der Schmalseite gezeigt mit zwei Möbelknoten 16, die über einen Verbindungssteg 5 miteinander verbunden sind und an denen jeweils ein Möbelbein 6 angeordnet ist. Auf den Verbindungsringen 4 bzw. den Kragarmen 7 liegt eine Tischplatte 17 auf. Achsgleich mit dem Möbelknoten 16 ist oberhalb der Tischplatte 17 ein Tragring 18 angeordnet, der entweder über den hier nicht gezeigten Gewindebolzen an die Tischplatte 17 bzw. den zugeordneten Möbelknoten 16 gespannt ist, oder über einen eigenen Gewindebolzen befestigt ist, der in das Gewinde des Verbundrings 4 greift. An dem Tragring 18 ist ein Stützarm 19 angeordnet, auf dem eine Platte 20 befestigt ist als zusätzliche Ablagemoglichkeit. Auf dem Tragring 18 ist ein weiterer Tragring 21 angeordnet, der einen schwenkbaren Stützarm 22 aufweist, auf dem eine Platte 23 als weitere zusätzliche Ablage befestigt ist.

In Fig. 7 und 8 sind als Beispiel ein rechteckiger und ein runder Tisch dargestellt, wobei beim rechteckigen Tisch nach Fig. 7 der lang ausgebildete Verbindungssteg 5 die beiden Möbelknoten 16 verbindet, von denen dann jeweils kurze Verbindungsstege 5 zu den anderen zwei Möbelknoten 16 führen. Bei dem in Fig. 8 dargestellten runden Tisch hingegen sind die zwei Verbindungsstege 5 über eine von den Möbelknoten 16 insoweit unabhängige Leiste 24 miteinander verbunden.

In Fig. 9 ist gezeigt, wie an einem solchen Tragring 18 und Stützarm 19 eine vertikal angeordnete Platte 25 befestigt sein kann. Zudem kann über den zweiten Tragring 21 eine Ablage 26 anmontiert sein.

In Fig. 10 wird der Tragring 18 genutzt, um daran eine Schreibtischlampe 27 zu befestigen.

Der Aufbau in Fig. 11 ist ähnlich dem in Fig. 6, nur daß an einer zwischen zwei Stützarmen 19 angeordneten Schiene 28 über entsprechende Gleiter 29 Tabletts 30 gelagert sind.

Im Anwendungsbeispiel gemäß Fig. 12 ist auf dem Tragring 18 über Stangen 31 ein Set 32 anmontiert, bei dem als Lampe eine Halogenbirne einen Spiegel anstrahlt, der das Licht auf den Tisch zurückreflektiert.

Für den Möbelknoten sind verschiedene Materialien verwendbar, insbesondere aber Aluminium, das geringes spezifisches Gewicht aufweist und mit hoher Präzision fertigbar ist.

Alle in der Beschreibung, den nachfolgenden Ansprüchen und der Zeichnung dargestellten Merkmale können sowohl einzeln als auch in beliebiger Kombination miteinander erfindungswesentlich sein.

Bezugszahlenliste

| 1 | Segment |
|---|---|
| 2 | Zapfen (kon) |
| 3 | Verbundring (Kappe) |
| 4 | Verbundring |
| 5 | Verbindungssteg |
| 6 | Möbelbein |
| 7 | Kragarm |
| 8 | Gewindebolzen |
| 9 | Kopf |
| 10 | Boden |
| 11 | Gewinde |
| 12 | Boden |
| 13 | zentrale Ausnehmung in 3 und 4 |
| 14 | Tragsegmente |
| 15 | Füllsegmente |
| 16 | Möbelknoten |
| 17 | Tischplatte |
| 18 | Tragring |
| 19 | Stützarm |
| 20 | Platte |
| 21 | Tragring |
| 22 | Stützarm |
| 23 | Platte |
| 24 | Leiste |
| 25 | Platte |
| 26 | Ablage |
| 27 | Schreibtischlampe |
| 28 | Schirm |
| 29 | Gleiter |

30     Tablett
31     Stangen
32     Set

## Patentansprüche

1.   Möbelknoten, an dem radial abzweigend - vorzugsweise horizontal - und axial verlaufend - vorzugsweise vertikal - Konstruktionselemente eines Möbelstückes
- vorzugsweise eines Tisches - befestigbar sind,
  dadurch gekennzeichnet,
  - daß der Möbelknoten (16) aus einem Bündel von Segmenten (1) besteht,
  - daß an mindestens einem dieser Segmente (1) ein Kunstruktionselement (5, 6) befestigt ist,
  - daß die Segmente (1) durch zwei deren Enden (2) mit einer zentralen Ausnehmung (13) umgreifende Verbundringe (3, 4) radial gebündelt sind und
  - daß die Verbundringe (3, 4) in axialer Richtung des Möbelknotens (16) miteinander verankert sind.

2.   Möbelknoten nach Anspruch 1, dadurch gekennzeichnet, daß an den Enden der Segmente (1) Zapfen (2) vorhanden sind, die bei gebündelten Segmenten (1) einen Kreisquerschnitt ergeben, so daß jeder Zapfen (2) für sich den Querschnitt eines Kreissegments aufweist, und daß die Verbundringe (3, 4) je eine zentrale Ausnehmung (13) mit einem entsprechend kreisförmigen Querschnitt aufweisen.

3.   Möbelknoten nach Anspruch 1 oder 2, dadurch gekennzeichnet, daß die zentrale Ausnehmung (13) der Verbundringe (3, 4) und die Zapfen (2) der Segmente (1) in Richtung auf die Segmente sich erweiternd konisch ausgebildet sind.

4.   Möbelknoten nach einem der vorhergehenden Ansprüche, dadurch gekennzeichnet, daß mindestens einer der Verbundringe (3, 4) topfartig ausgebildet ist.

5.   Möbelknoten nach einem der vorhergehenden Ansprüche, dadurch gekennzeichnet, daß die beiden Verbundringe (3, 4) über einen zentralen Zuganker (8) zusammenspannbar sind.

6.   Möbelknoten nach Anspruch 5, dadurch gekennzeichnet, daß der Zuganker als Gewindebolzen (8) ausgebildet ist.

7.   Möbelknoten nach Anspruch 4-6, dadurch gekennzeichnet, daß im Topfboden des einen Verbundringes (4) eine Gewindebohrung (11) für den Zuganker (8) vorhanden ist.

8.   Möbelknoten nach einem der vorhergehenden Ansprüche, dadurch gekennzeichnet, daß mindestens einer der radial abzweigenden Konstruktionselemente als Möbelbein (6) ausgebildet ist, welches entsprechend in Richtung Aufstellfläche (Boden) geführt ist.

9.   Möbelknoten nach einem der vorhergehenden Ansprüche, dadurch gekennzeichnet, daß mindestens einer der radial abzweigenden Konstruktionselemente als Verbindungssteg (5) zu einem anderen Möbelknotensegment (16) ausgebildet ist.

10.   Möbelknoten nach einem der vorhergehenden Ansprüche, dadurch gekennzeichnet, daß am Verbundring (4) ein radial auskragender Arm (7) angeordnet ist zur Auflage und Befestigung sonstiger Möbelteile, insbesondere einer Tischplatte.

11.   Möbelknoten nach einem der Ansprüche 5-10, dadurch gekennzeichnet, daß durch den Zuganker (8) in axialer Richtung weitere Möbelteile ankoppelbar sind.

12.   Möbelknoten nach Anspruch 11, dadurch gekennzeichnet, daß über den Zuganker (8) auf der dem Verbundring (4) abgewandten Seite einer Platte (17) ein Tragring (18) festspannbar ist, an dem über Stützarme (19) weitere Möbelelemente (Tablett 20, 23; Lampe 27, 32; Vertikalplatte 25 usw.) befestigbar sind.

13.   Möbelknoten nach Anspruch 11 oder 12, dadurch gekennzeichnet, daß achsgleich am Tragring (18) ein weiterer Tragring (21) befestigbar ist, an dem ebenfalls weitere Möbelelemente angeordnet werden können.

Fig. 1

Fig.2

Fig. 3

Fig.4

Fig. 5

Fig. 6

Fig. 7

Fig. 8

Fig. 9

Fig. 10

Fig. 11

Fig. 12

Europäisches
Patentamt

EUROPÄISCHER
RECHERCHENBERICHT

Nummer der Anmeldung

EP 91 10 8752

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y,A | WO-A-8 605 373 (LEXO INDUSTRIAL AB)<br>* Zusammenfassung; Abbildungen 4,8,9 ** Seite 10, Zeile 30 - Seite 11, Zeile 23 *<br>- - - | 1-8,<br>11-13,10 | A 47 B 13/02<br>F 16 B 12/52<br>F 16 B 12/44<br>F 16 B 12/30 |
| X,A | GB-A-8 300 01 (LIMIT ENGINEERING GROUP LTD.)<br>* Seite 1, Zeile 13 - Zeile 22 ** Seite 1, Zeile 73 - Seite 2, Zeile 32; Abbildungen 1,7,10,11,14 ** Abbildungen 10,11 *<br>- - - | 1-10,<br>11-13 | |
| Y | FR-A-1 511 146 (MOLTER)<br>* das ganze Dokument *<br>- - - - - | 11-13 | |

RECHERCHIERTE
SACHGEBIETE (Int. Cl.5)

A 47 B
F 16 B

Der vorliegende Recherchenbericht wurde für alle Patentansprüche erstellt

| Recherchenort | Abschlußdatum der Recherche | Prüfer |
|---|---|---|
| Den Haag | 06 September 91 | JONES C.T. |